# EUROPEAN PATENT SPECIFICATION

(11) **EP 3 422 311 B1**
(45) Date of publication and mention of the grant of the patent: **10.06.2020**
(21) Application number: 18180158.0
(22) Date of filing: 27.06.2018
(51) Int. Cl.: G08B 3/10, H04B 11/00, G08B 1/08

(54) **SYSTEM AND METHOD FOR DOWNLOADING DATA FROM A MONITORING DEVICE TO A MOBILE DEVICE**
SYSTEM UND VERFAHREN ZUM HERUNTERLADEN VON DATEN VON EINER ÜBERWACHUNGSVORRICHTUNG AN EINE MOBILE VORRICHTUNG
SYSTÈME ET PROCÉDÉ PERMETTANT DE TÉLÉCHARGER DES DONNÉES D'UN DISPOSITIF DE SURVEILLANCE VERS UN DISPOSITIF MOBILE

(30) Priority: 30.06.2017 US 201762527142 P; 26.06.2018 US 201816018329
(43) Date of publication of application: 02.01.2019
(73) Proprietor: Honeywell International Inc., Morris Plains, NJ 07950 (US)
(72) Inventor: SAIA, Gaetano, Morris Plains, NJ 07950 (US); VAN KLAVEREN, Nicolaas, Morris Plains, NJ 07950 (US); HUA, Zhenyi, Morris Plains, NJ 07950 (US); MA, Junyu, Morris Plains, NJ 07950 (US); LI, Dongke, Morris Plains, NJ 07950 (US); MAO, Zhuo, Shanghai 200120 (CN)
(74) Representative: Houghton, Mark Phillip

(56) References cited:
- EP-A1- 1 746 552
- EP-A2- 2 461 299
- GB-A- 2 429 316
- GB-A- 2 502 649

## Description

### FIELD

The present invention relates to monitoring devices. More particularly, the present invention relates to systems and methods for downloading data from a monitoring device to a mobile device.

### BACKGROUND

Battery powered smoke detectors and carbon monoxide detectors are known in the art, and wirelessly downloading data from the smoke detectors and the carbon monoxide detectors to a mobile device is also known in the art. For example, some known systems and methods include an audio link application on the mobile device that facilitates downloading the data from a detector, wherein the data includes a history log of alarm events and fault events. These known systems and methods use a speaker or a buzzer in the detector to transmit the data to the mobile device and a microphone in the mobile device to receive the data from the detector. Subsequently, the data as downloaded can be emailed or otherwise transmitted from or presented by the mobile device to a user so that the user can investigate the data or use the data to improve the detector going forward.

Some known systems and methods use audible, high volume, low frequency sounds (2-4 kHz) to download the data from the detector to the mobile device. However, such high volume sounds are uncomfortable to users within hearing range of the detector during download. Alternatively, some known systems and methods use low volume sounds to download the data from the detector to the mobile device. However, such low volume sounds have a low transmission speed.

In view of the above, there is a continuing, ongoing need for improved systems and methods.

GB2502649 disclose A stand for a mobile electronic consumer electronics device capable of digital image acquisition, said stand comprising internal power supply or at least a connector for a replaceable internal power supply or an external power supply for providing electric power to the stand and optionally charging the mobile device support portion for contacting and supporting the mobile device while docked, electric motor for dynamically adjusting the alignment of the mobile device through rotation, such as panning and/or tilting, of the support portion, wireless interface for receiving data input, and alignment logic for controlling the electric motor based on the data input. A method for utilizing a similar stand is presented.

### BRIEF DESCRIPTION OF THE DRAWINGS

FIG.1 is a block diagram of a system in accordance with disclosed embodiments; and
FIG. 2 is a flow diagram of a method in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for downloading data from a monitoring device to a mobile device. For example, the monitoring device can transmit the data to the mobile device, and a microphone in the mobile device can receive the data from the monitoring device. In some embodiments, the monitoring device can transmit the data via an integrated speaker, buzzer, or similar audio generating device broadcasting a non-audible, high frequency audio signal.

It is to be understood that the monitoring device as disclosed and described herein can include a wired or wireless smoke detector, carbon monoxide detector, fire detector, or loT device as would be understood by one of ordinary skill in the art. In some embodiments, the mobile device can include a user device, such as a smart phone as would be known and understood by one of ordinary skill in the art.

In accordance with disclosed embodiments, the monitoring device can wirelessly transmit the data to the mobile device in the non-audible, high frequency audio signal, and in some embodiments, such a signal can be a non-RF signal. In accordance with disclosed embodiments, even though the signal transmitted by the monitoring device is not audibly perceptible to a user, the signal can be detected by the microphone of the mobile device.

In some embodiments, because the data is transmitted at the high frequency, systems and methods disclosed herein can transmit the data at a high rate and have a high transmission speed that, for example, allows the data to download in less than 30 seconds. In some embodiments, the high frequency can be approximately 18 kHz or higher, and in some embodiments, the high frequency can be approximately 20kHz. In some embodiments, systems and methods disclosed herein can use variable length data coding to decrease an average time to download the data.

In some embodiments, upon receiving the data, the mobile device or a processer thereof can execute an audio analytics application to decode the data and present the data, audibly or visually, in a manner that can be understood by the user. According to the present invention, the mobile device can estimate and compensate for frequency error on the signal received from the monitoring device. According to the present invention, the processor can compensate for the frequency error by estimating missing portions of the data from uncorrupted portions of the data.

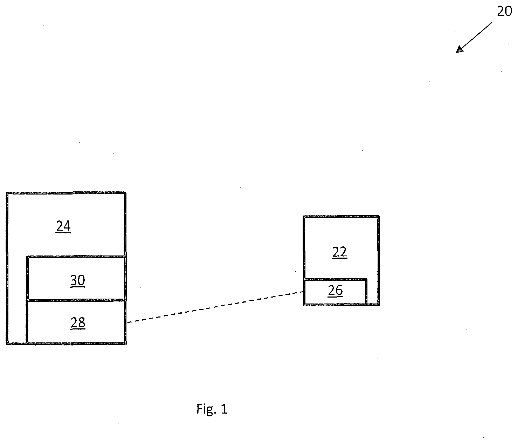

FIG. 1 is a block diagram of a system 20 in accordance with disclosed embodiments. As seen in FIG. 1, the system 20 can include a monitoring device 22 and a mobile device 24. As also seen in FIG. 1, the monitoring device 22 can include an audio generating device 26, such as a speaker or a buzzer, and the mobile device 24 can include a microphone 28 and a processor 30. As disclosed herein, the audio generating device 26 can transmit data to the mobile device 24 in a non-audible, high frequency audio signal, and the microphone 28 can obtain the data from the monitoring device by receiving the non-audible, high frequency audio signal transmitted by the audio generating device 26.

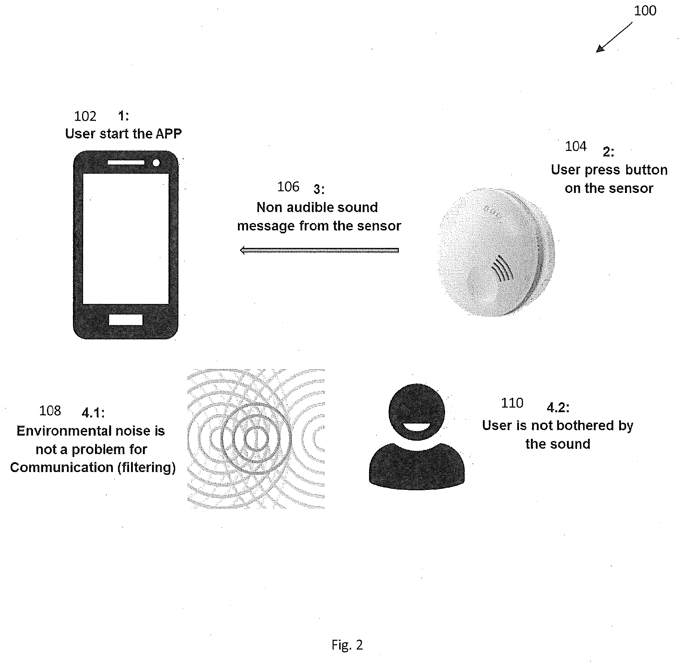

FIG. 2 is a flow diagram of a method 100 in accordance with disclosed embodiments. As seen in FIG. 2, the method 100 can include the mobile device 24 receiving first user input to launch a software application being executed on the mobile device 24, as in 102. Then, the method 100 can include the monitoring device 22 receiving second user input, such as a user depressing a button on the monitoring device 22, to initiate transmission of the non- audible, high frequency audio signal that includes the data, as in 104, and the audio generating device 26 of the monitoring device 22 transmitting the non-audible, high frequency audio signal, as in 106. Finally, the method 100 can include the processor 28 of the mobile device 24 filtering out environmental noise received by the microphone 28, as in 108, and the microphone 28 of the mobile device 24 receiving the data in the non-audible, high frequency audio signal from the monitoring device 22, thereby obtaining the data from the monitoring device 22 without bothering the user of the mobile device 24 with harsh noises, as in 110.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the scope of the invention. It is to be understood that no limitation with respect to the specific system or method described herein is intended or should be inferred. It is, of course, intended to cover all such modifications as fall within the scope of the invention.

## Claims

1. A system (20) comprising:
a monitoring device (22) that includes an audio generating device (26); and
a mobile device (24) that includes a microphone (28) and a processor (30),
wherein the monitoring device transmits, via the audio generating device, data to the mobile device in a non-audible, high frequency audio signal,
wherein the mobile device receives, via the microphone, the non-audible, high frequency audio signal and decodes, via the processor, the data from the non-audible, high frequency audio signal, and
wherein the processor compensates for frequency error in the non-audible, high frequency audio signal by estimating missing portions of the data from uncorrupted portions of the data.

2. The system of claim 1 wherein the high frequency enables the monitoring device to complete transmission of the data to the mobile device in less than 30 seconds.

3. The system of claim 1 wherein the high frequency is at least 18 kHz.

4. The system of claim 3 wherein the high frequency is approximately 20 kHz.

5. The system of claim 1 wherein the monitoring device uses variable length data coding to decrease a download time for the data.

6. The system of claim 1 wherein the mobile device includes a user device or a smart phone.

7. The system of claim 1 wherein the monitoring device includes a smoke detector, a carbon monoxide detector, a fire detector, or an IoT device.

8. A method comprising:
transmitting, via an audio generating device (26), data to a mobile device (24) in a non-audible, high frequency audio signal;
receiving, via a microphone (28) of the mobile device, the non-audible, high frequency audio signal;
decoding, via a processor (30) of the mobile device, the data from the non-audible, high frequency audible signal; and
estimating, via the processor, missing portions of the data from uncorrupted portions of the data to compensate for frequency error in the non-audible, high frequency audible signal.

9. The method of claim 8 further comprising completing transmission of the data to the mobile device in less than 30 seconds.

10. The method of claim 8 wherein the high frequency is at least 18 kHz.

11. The method of claim 10 wherein the high frequency is approximately 20 kHz.

## Patentansprüche

1. System (20), umfassend:
eine Überwachungsvorrichtung (22), die eine Audioerzeugungsvorrichtung (26) enthält; und
eine mobile Vorrichtung (24), die ein Mikrofon (28) und einen Prozessor (30) enthält,
wobei die Überwachungsvorrichtung über die Audioerzeugungsvorrichtung Daten in einem nicht hörbaren Hochfrequenz-Audiosignal an die mobile Vorrichtung überträgt,
wobei die mobile Vorrichtung über das Mikrofon das nicht hörbare Hochfrequenz-Audiosignal empfängt und über den Prozessor die Daten von dem nicht hörbaren Hochfrequenz-Audiosignal decodiert und
wobei der Prozessor einen Frequenzfehler in dem nicht hörbaren Hochfrequenz-Audiosignal durch das Schätzen von fehlenden Teilen der Daten aus nicht beschädigten Teilen der Daten kompensiert.

2. System nach Anspruch 1, wobei die Hochfrequenz es der Überwachungsvorrichtung ermöglicht, die Übertragung der Daten an die mobile Vorrichtung in weniger als 30 Sekunden abzuschließen.

3. System nach Anspruch 1, wobei die Hochfrequenz mindestens 18 kHz beträgt.

4. System nach Anspruch 3, wobei die Hochfrequenz ungefähr 20 kHz beträgt.

5. System nach Anspruch 1, wobei die Überwachungsvorrichtung eine Datencodierung variabler Länge verwendet, um eine Downloadzeit für die Daten zu verringern.

6. System nach Anspruch 1, wobei die mobile Vorrichtung eine Benutzervorrichtung oder ein Smartphone enthält.

7. System nach Anspruch 1, wobei die Überwachungsvorrichtung einen Rauchmelder, einen Kohlenmonoxidmelder, einen Brandmelder oder eine IoT-Vorrichtung enthält.

8. Verfahren, umfassend:
Übertragen von Daten an eine mobile Vorrichtung (24) in einem nicht hörbaren Hochfrequenz-Audiosignal über eine Audioerzeugungsvorrichtung (26);
Empfangen des nicht hörbaren Hochfrequenz-Audiosignals über ein Mikrofon (28) der mobilen Vorrichtung;
Decodieren der Daten von dem nicht hörbaren Hochfrequenz-hörbaren Signal über einen Prozessor (30) der mobilen Vorrichtung; und
Schätzen von fehlenden Teilen der Daten aus nicht beschädigten Teilen der Daten, um Frequenzfehler in dem nicht hörbaren Hochfrequenz-hörbaren Signal zu kompensieren, über den Prozessor.

9. Verfahren nach Anspruch 8, ferner umfassend das Abschließen der Übertragung der Daten an die mobile Vorrichtung in weniger als 30 Sekunden.

10. Verfahren nach Anspruch 8, wobei die Hochfrequenz mindestens 18 kHz beträgt.

11. Verfahren nach Anspruch 10, wobei die Hochfrequenz ungefähr 20 kHz beträgt.

## Revendications

1. Système (20) comprenant :
un dispositif de surveillance (22) qui comprend un dispositif de production audio (26) ; et
un dispositif mobile (24) qui comprend un microphone (28) et un processeur (30),
dans lequel le dispositif de surveillance transmet, par l'intermédiaire du dispositif de production audio, des données au dispositif mobile dans un signal audio haute fréquence non audible,
dans lequel le dispositif mobile reçoit, par l'intermédiaire du microphone, le signal audio haute fréquence non audible et décode, par l'intermédiaire du processeur, les données provenant du signal audio haute fréquence non audible et
dans lequel le processeur compense l'erreur de fréquence dans le signal audio haute fréquence non audible en estimant les parties manquantes des données à partir des parties non corrompues des données.

2. Système selon la revendication 1, dans lequel la haute fréquence permet au dispositif de surveillance de terminer la transmission des données au dispositif mobile en moins de 30 secondes.

3. Système selon la revendication 1, dans lequel la haute fréquence est d'au moins 18 kHz.

4. Système selon la revendication 3, dans lequel la haute fréquence est d'environ 20 kHz.

5. Système selon la revendication 1, dans lequel le dispositif de surveillance utilise un codage de données de longueur variable pour diminuer un temps de téléchargement des données.

6. Système selon la revendication 1, dans lequel le dispositif mobile comprend un dispositif d'utilisateur ou un téléphone intelligent.

7. Système selon la revendication 1, dans lequel le dispositif de surveillance comprend un détecteur de fumée, un détecteur de monoxyde de carbone, un détecteur d'incendie ou un dispositif d'IdO.

8. Procédé comprenant :
la transmission, par l'intermédiaire d'un dispositif de production audio (26), de données à un dispositif mobile (24) dans un signal audio haute fréquence non audible ;
la réception, par l'intermédiaire d'un microphone (28) du dispositif mobile, du signal audio haute fréquence non audible ;
le décodage, par l'intermédiaire d'un processeur (30) du dispositif mobile, des données du signal audible haute fréquence non audible ; et
l'estimation, par l'intermédiaire du processeur, des parties manquantes des données à partir de parties non corrompues des données pour compenser l'erreur de fréquence dans le signal audible haute fréquence non audible.

9. Procédé selon la revendication 8, comprenant en outre l'achèvement de la transmission des données au dispositif mobile en moins de 30 secondes.

10. Procédé selon la revendication 8, dans lequel la haute fréquence est d'au moins 18 kHz.

11. Procédé selon la revendication 10, dans lequel la haute fréquence est d'environ 20 kHz.
